# EUROPEAN PATENT SPECIFICATION

(11) **EP 2 037 452 B1**
(45) Date of publication and mention of the grant of the patent: **26.12.2012**
(21) Application number: 08157273.7
(22) Date of filing: 30.05.2008
(51) Int. Cl.: G11B 5/66

(54) **Perpendicular magnetic recording medium and method of manufacturing the same**
Magnetisches Aufzeichnungsmittel und Verfahren zu seiner Herstellung
Moyen d'enregistrement magnétique perpendiculaire et procédé pour sa fabrication

(30) Priority: 12.09.2007 KR 20070092654; 01.02.2008 KR 20080010821
(43) Date of publication of application: 18.03.2009
(73) Proprietor: Samsung Electronics Co., Ltd., Suwon-si, Gyeonggi-do, 443-742 (KR)
(72) Inventor: Park, Sang-hwan c/o Samsung Advanced Inst.of Techn., Gyeonggi-do (KR); Lee, Hoo-san c/o Samsung Advanced Inst.of Techn., Gyeonggi-do (KR); Lee, Taek-dong c/o Samsung Advanced Inst.of Techn., Gyeonggi-do (KR); Oh, Hoon-sang c/o Samsung Advanced Inst.of Techn., Gyeonggi-do (KR); Kong, Sok-hyun c/o Samsung Advanced Inst.of Techn., Gyeonggi-do (KR)
(74) Representative: Cloughley, Peter Andrew

(56) References cited:
- EP-A- 1 635 335
- WO-A-2006/134952
- JP-A- 2002 230 735
- US-A1- 2002 012 816
- US-A1- 2006 222 901

## Description

### BACKGROUND OF THE INVENTION

Apparatuses and methods consistent with the present invention relate to a perpendicular magnetic recording medium, and more particularly, to a perpendicular magnetic recording medium including a recording layer that has small magnetic particles and is thermally stable, and a method of manufacturing the perpendicular magnetic recording medium.

With the rapid increase in the amount of data handled in various applications, the demands for higher density data storage devices for recording and reproducing data have increased. In particular, since magnetic recording devices employing a magnetic recording medium have high storage capacity and high speed access, they have attracted much attention as data storage devices for various digital devices as well as computer systems.

Data recording for magnetic recording devices can be roughly classified into longitudinal magnetic recording and perpendicular magnetic recording. In longitudinal magnetic recording, data is recorded using the parallel alignment of the magnetization of a magnetic layer on a surface of the magnetic layer. In perpendicular magnetic recording, data is recorded using the perpendicular alignment of a magnetic layer on a surface of the magnetic layer. From the perspective of data recording density, perpendicular magnetic recording is more advantageous than longitudinal magnetic recording.

Perpendicular magnetic recording media have a double-layer structure including a soft magnetic underlayer forming the magnetic path of a recording magnetic field and a recording layer magnetized in a direction perpendicular to a surface of the magnetic recording media by the soft magnetic underlayer.

In order to achieve high density recording, perpendicular magnetic recording media must have a high coercive force and perpendicular magnetic anisotropic energy for a recording layer to secure the stability of recorded data, a small grain size, and a small magnetic domain size due to a low exchange coupling constant between grains. An exchange coupling constant indicates the strength of magnetic interaction between the grains in the recording layer. As the exchange coupling constant decreases, it becomes easier to decouple the grains. In order to manufacture such high density perpendicular magnetic recording media, a technology for maximizing the magnetic anisotropic energy Ku and perpendicular crystal orientation of the recording layer is necessary.

US2006/0222901 describes a magnetic recording medium with a number of layers, including in particular a first writing layer of CoCrPt and SiO₂ and a second layer of lower magnetic anisotropy of CoCrPtB.

US2002/0012816 describes a magnetic recordin medium with multiple layers with a higher magnetic anisotropy energy in a first (lower) perpendicular magnetic film than a second perpendicular magnetic film. There is an undercoat under the first perpendicular magnetic film and under the second perpendicular magnetic film, the latter being between the two films and accompanied by a protective film.

JP2002-230735 describes a perpendicular magnetic recording medium with a thin CoCrPt layer of low Cr concentration on a CoCr film having a high Cr concentration.

EP 1 635 335 describes a perpendicular magnetic recording medium with a CoCrPt layer and an underlayer of Ru and metal or silicon oxide under the CoCrPt layer.

WO2006/134952 describes a three-layer perpendicular magnetic recording medium with a first layer of CrPt and a metal oxide or semiconductor oxide, a second layer of CoCr and a third layer of CoCrPtB.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a perpendicular magnetic recording medium, which can increase the magnetic anisotropic energy Ku of a recording layer, clearly separate grains closely formed in the recording layer, and improve crystal orientation, and a method of manufacturing the perpendicular magnetic recording medium.

According to an aspect of the present invention, there is provided a perpendicular magnetic recording medium according to claim 1.

The first ferromagnetic layer may have a Pt concentration of 10 to 50 at%.

The second ferromagnetic layer may have a Pt concentration of 1 to 30 at%.

The first ferromagnetic layer may have a magnetic anisotropic energy of 5x10⁵ to 5x10⁶ Jm⁻³, 5x10⁶ to 5x10⁷ erg/cc.

The second ferromagnetic layer may have a magnetic anisotropic energy of 5x10⁵ Jm⁻³, 1x10⁶ to 5x10⁶ erg/cc.

The underlayer may comprise a first underlayer formed of Ru and a second underlayer formed of Ru and an oxide, wherein the second underlayer is formed on the first underlayer,
wherein grains contained in the second underlayer are formed of Ru and an oxide component is interposed between the grains.

A buffer layer is interposed between the soft magnetic layer and the underlayer, and wherein the buffer layer suppresses magnetic interaction between the soft magnetic layer and the recording layer.

According to another aspect of the present invention, there is provided a method of manufacturing a perpendicular magnetic recording medium, the method comprising: forming a soft magnetic layer on a substrate; forming a buffer layer on the soft magnetic layer; forming an underlayer formed of Ru and oxygen on the buffer layer; forming a plurality of ferromagnetic layers on the underlayer; and depositing a capping layer formed of CoCrPtB on the plurality of ferromagnetic layers, wherein each of the plurality of ferromagnetic layers has a magnetic anisotropic energy which decreases as distance increases from the underlayer.

The first ferromagnetic layer may have a Pt concentration of 10 to 50 at%, and the second ferromagnetic layer a Pt concentration of 1 to 30 at%.

The underlayer may be formed by sequentially stacking a first underlayer formed of Ru and a second underlayer formed of Ru and oxygen.

The second underlayer may be formed by reactive sputtering in which oxygen gas, which amounts to 0.1 to 5 % of total gas, is introduced at room temperature using a Ru target.

The first and second ferromagnetic layers may be formed by sputtering, wherein a first sputtering power and a first pressure, which are used to form the first ferromagnetic layer, are respectively greater and smaller than a second sputtering power and a second pressure, which are used to form the second ferromagnetic layer.

### BRIEF DESCRIPTION OF THE DRAWINGS

The above and other features of the present invention will become more apparent by describing in detail exemplary embodiments thereof with reference to the attached drawings in which:
FIG. 1 is a cross-sectional view of a perpendicular magnetic recording medium according to an exemplary embodiment of the present invention;
FIG. 2 is a transmission electron microscopy (TEM) image of an underlayer of the perpendicular magnetic recording medium of FIG. 1;
FIGS. 3A through 3C are graphs illustrating magnetic properties when ferromagnetic layers of a recording layer are stacked in different orders;
FIG. 4 is a TEM image of a recording layer of the perpendicular magnetic recording medium of FIG. 1;
FIG. 5 is a graph illustrating the magnetic hysteresis loop of a recording layer when a capping layer is used and when a capping layer is not used; and
FIGS. 6A through 6E are cross-sectional views illustrating a method of manufacturing a perpendicular magnetic recording medium according to an exemplary embodiment of the present invention.

### DETAILED DESCRIPTION OF EXEMPLARY EMBODIMENTS OF THE INVENTION

The present invention will now be described more fully with reference to the accompanying drawings, in which exemplary embodiments of the invention are shown. The invention may, however, be embodied in many different forms and should not be construed as being limited to the exemplary embodiments set forth herein; rather these exemplary embodiments are provided so that this disclosure will be thorough and complete, and will fully convey the concept of the invention to those skilled in the art. In the drawings, the same reference numeral denotes the same element and the thicknesses of elements may be exaggerated for clarity and convenience.

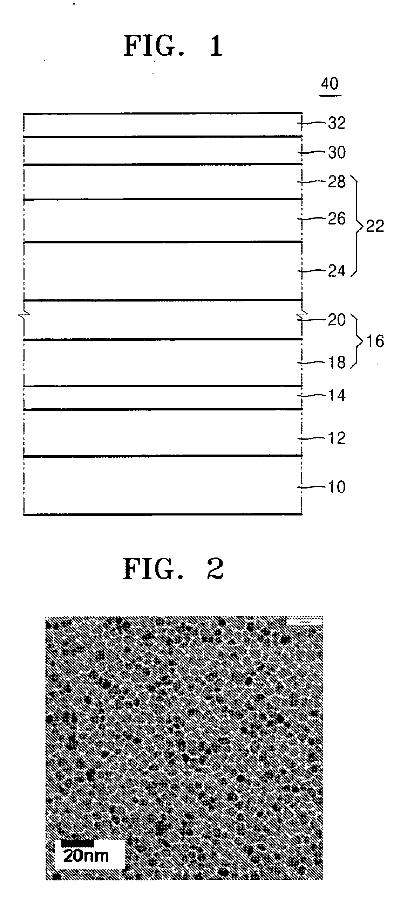

FIG. 1 is a cross-sectional view of a perpendicular magnetic recording medium according to an exemplary embodiment of the present invention.

Referring to FIG. 1, wherein the perpendicular magnetic recording medium is formed by sequentially stacking a substrate 10, a soft magnetic underlayer 12, a buffer layer 14, an underlayer 16, a recording layer 22, a protective layer 30, and a lubricating layer 32.

The substrate 10 may be formed of glass or an AlMg alloy, and may have a disk shape.

The soft magnetic underlayer 12 forms a magnetic path of a perpendicular magnetic field generated from a write head in a magnetic recording mode such that information can be written to the recording layer 22. The soft magnetic underlayer 12 may be formed of a CoZrNb alloy, a CoFeZrNb alloy, a CoFeB alloy, or a NiFe alloy.

The buffer layer 14 suppresses magnetic interaction between the soft magnetic underlayer 12 and the recording layer 22, and is formed of Ti.

The underlayer 16 improves the crystal orientation and magnetic properties of the recording layer 22, and has a double-layer structure including a first underlayer 18 formed of Ru and a second underlayer 20 formed of Ru and oxygen. Grains of the second underlayer 20 are formed of Ru and an oxide component is interposed between the grains. To this end, the second underlayer 20 containing Ru and an oxide is formed by reactive sputtering in an atmosphere having an oxygen concentration of 0.1 to 5 % (=O₂/(Ar+O₂). The first underlayer 18 improves the crystal orientation of the recording layer 22, and the second underlayer 20 controls the grain size of the recording layer 22 to be small and uniform. FIG. 2 is a transmission electron microscopy (TEM) image of the second underlayer 20 formed by sputtering in an atmosphere having an oxygen concentration of 1 %. Referring to FIG. 2, the grains of the second underlayer 20 are closely formed, and oxygen is included in the boundary zones of the grains to clearly isolate the grains. The grains formed of Ru have an average size of 5.4 nm.

The first underlayer 18 is formed of Ru in FIG. 1, the present exemplary embodiment is not limited thereto, and the first underlayer 18 may be formed of Ru and oxygen. However, in order to ensure a small and uniform grain size for the recording layer 22, oxygen-containing Ru is deposited on at least an upper portion of the underlayer 16.

The recording layer 22 has a multi-layer structure where a first ferromagnetic layer 24, a second ferromagnetic layer 26, and a capping layer 28 are sequentially stacked on the underlayer 16.

The first ferromagnetic layer 24 has a magnetic anisotropic energy greater than that of the second ferromagnetic layer 26. The first ferromagnetic layer 24 is formed of any one selected from the group consisting of CoPt-TiO₂, CoPt-SiO₂ and CoPt-CrO with a high magnetic anisotropic energy. The first ferromagnetic layer 24 may have a magnetic anisotropic energy of 5x10⁶ to 5x10⁷ erg/cc. The first ferromagnetic layer 24 has a Pt concentration of 10 to 50 at%. The second ferromagnetic layer 26 is formed of any one selected from the group consisting of CoCrPt-TiO₂, CoCrPt-SiO₂ and CoCrPt-CrO with a low magnetic anisotropic energy. The second ferromagnetic layer 26 has a magnetic anisotropic energy of 1x10⁶ to 5x10⁶ erg/cc and a Pt concentration of 1 to 30 at%. Crystal grains contained in each of the first and second ferromagnetic layers 24 and 26 are isolated from one another by an oxide material. The grains are formed of a Co alloy material, and the oxide material is interposed between the grains.

It is known that in the case of a CoCrPt magnetic layer, a magnetic anisotropic energy increases as Pt concentration increases. When Cr is removed from the CoCrPt magnetic layer and Pt concentration increases to 10 to 50 at%, preferably, to 20 to 30 at%, the perpendicular magnetic anisotropic energy of the magnetic layer can increase up to 5x10⁷ erg/cc. However, once Cr is removed, it becomes harder to decouple grains. Accordingly, according to the present exemplary embodiment, the second underlayer 20 for improving crystal orientation is formed of Ru and oxygen, the first ferromagnetic layer 24 disposed on the second underlayer 20 is formed of any one selected from the group consisting of CoPt-TiO₂, CoPt-SiO₂ and CoPt-CrO, and the second ferromagnetic layer 26 disposed on the first alloy oxide layer 24 is formed of any one selected from the group consisting of CoCrPt-TiO_{2,} CoCrPt-SiO₂ and CoCrPt-CrO, so as to easily separate the grains.

Although the first and second ferromagnetic layers 24 and 26 are shown in FIG. 1, the present exemplary embodiment is not limited thereto, and three or more ferromagnetic layers may be formed. When three or more ferromagnetic layers are formed, each of the ferromagnetic layers may have a magnetic anisotropic energy which decreases as distance increases from the underlayer 20 toward the capping layer 28.

The capping layer 28 is disposed on the first and second ferromagnetic layers 24 and 26 to improve recording characteristics. The capping layer 28 is formed of CoCrPtB. Accordingly, the capping layer 28 is a continuous thin film wherein grains are not separated by an oxide. The capping layer 28 can thermally stabilize the recording layer 22, and improve the recording characteristics by reducing the magnetic saturation field Hs of the recording layer 22.

The protective layer 30 for protecting the recording layer 22 from the outside may be formed of diamond-like carbon (DLC). The lubricating layer 32 formed of tetraol may be formed on the protective layer 30 to reduce the abrasion of the magnetic head and the protective layer 30 due to collision with and sliding of the magnetic head.

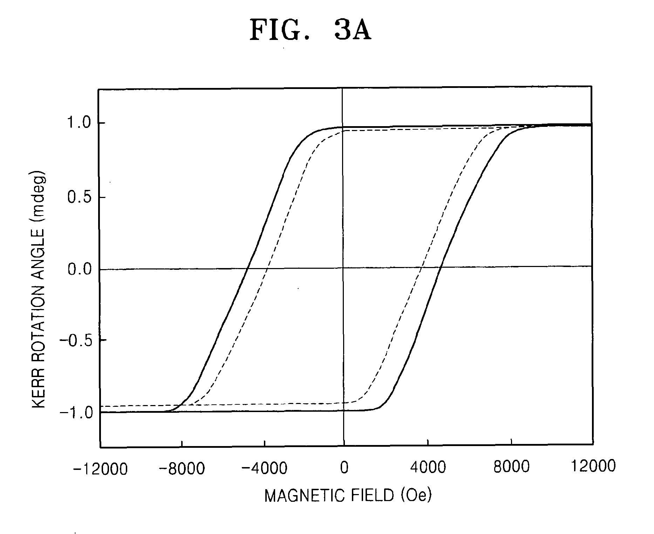

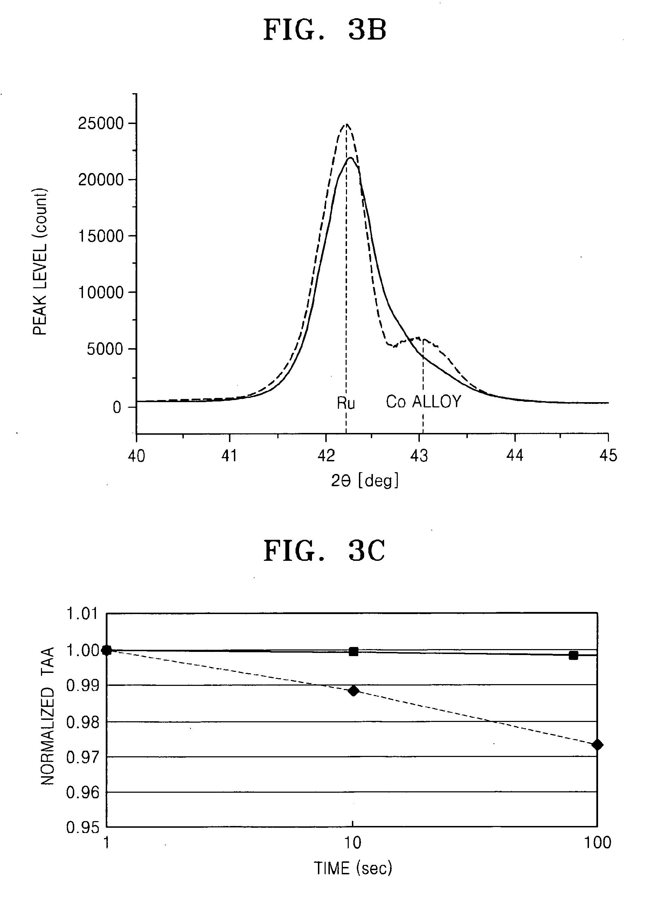

FIGS. 3A through 3C are graphs illustrating magnetic properties when ferromagnetic layers of a recording layer are stacked in different orders. A solid line represents a present example where a recording layer is formed by sequentially stacking a CoPt-TiO₂ layer, a CoCrPt-SiO₂ layer, and a CoCrPtB layer, and a dotted line represents a comparative example where a recording layer is formed by sequentially stacking a CoCrPt-SiO₂ layer, a CoPt-TiO₂ layer, and a CoCrPtB layer. FIG. 3A illustrates magnetic hysteresis loops of the recording layers in the cases of the present example and the comparative example. FIG. 3B illustrates X-ray diffraction analysis results in the cases of the present example and the comparative example. FIG. 3C illustrates track average amplitudes (TAAs) of the recording layers over time in the cases of the present example and the comparative example. Referring to FIG. 3A, the recording layer of the present example has a coercive force much greater than that of the recording layer of the comparative example. Referring to FIG. 3B, the recording layer of the present example has a magnetic anisotropic energy Ku greater than that of the recording layer of the comparative example. Since the CoCrPt-SiO₂ layer having a distance between atoms in a crystal face parallel to a substrate less than that of the CoPt-TiO₂ layer is stacked on the CoPt-TiO₂ layer, the crystal orientation of the recording layer of the present example is improved, thereby improving the magnetic anisotropic energy Ku of the recording layer. In this regard, even when the recording layer includes two or more ferromagnetic layers, the magnetic anisotropic energy of the recording layer can be improved by improving crystal orientation. For example, when a recording layer includes a plurality of ferromagnetic layers and a lower layer of the plurality of ferromagnetic layers having a distance between atoms in a crystal face parallel to a substrate less than that of a upper layer of the plurality of ferromagnetic layers is stacked on the upper layer, crystal orientation can be improved and thus the total magnetic anisotropic energy of the recording layer can be improved. Also, a magnetic anisotropic energy increases as a Pt concentration increases. Accordingly, when a lower ferromagnetic layer has a Pt concentration greater than that of an upper ferromagnetic layer, the lower ferromagnetic layer can have a magnetic anisotropic energy greater than that of the upper ferromagnetic layer. Any one selected from CoPt-SiO₂ and CoPt-CrO has a greater distance between atoms in a crystal face parallel to a substrate as similar to the hexagonally-close-packed (hcp) CoPt-TiO₂ layer which is used as the recording layer of the present example, thus CoPt-SiO₂, CoPt-CrO or CoPt-TiO₂ may be used as a lower layer under the layer comprising any one selected from the group consisting of CoPt-TiO₂, CoPt-SiO₂ and CoPt-CrO. Referring to FIG. 3C, the recording layer of the present example is much more thermally stable than the recording layer of the comparative example.

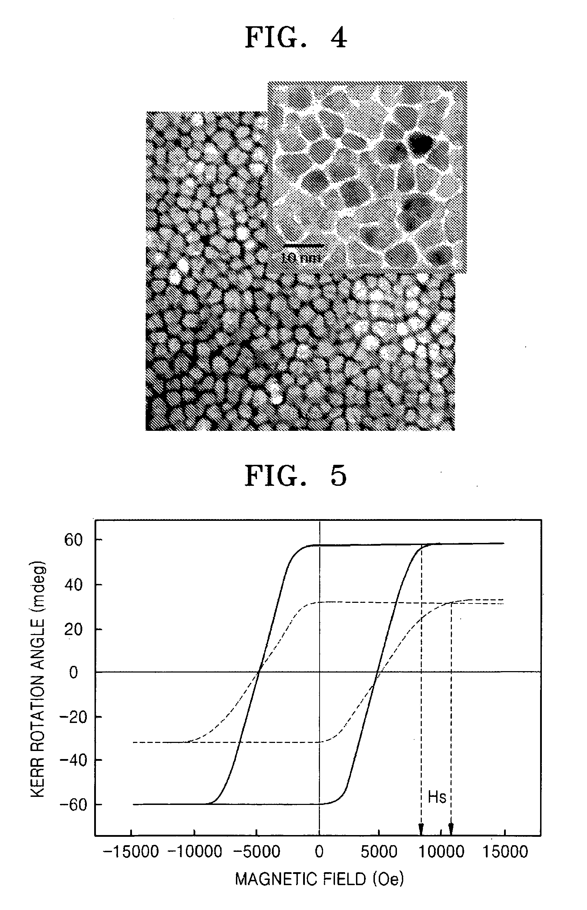

FIG. 4 is a TEM image of the recording layer 22 of the perpendicular magnetic recording medium of FIG. 1.

Referring to FIG. 4, the recording layer 22 is formed by sequentially stacking a CoPt-TiO₂ layer, a CoCrPt-SiO₂ layer, and a CoCrPtB layer on the underlayer 16 including the first underlayer 18 formed of Ru and the second underlayer 20 formed of Ru and oxygen. The recording layer has an average grain size of 5.7 nm, and grains are clearly isolated from one another. This seems to be because the well-isolated grains of the underlayer 16 affect the recording layer 22 and improve the granular structure of the recording layer 22.

FIG. 5 is a graph illustrating the magnetic hysteresis loop of a recording layer when a capping layer is used and when a capping layer is not used.

Referring to FIG. 5, when a capping layer is formed on first and second ferromagnetic layers, a magnetization saturation magnetic field is drastically reduced. Accordingly, magnetization can be easily obtained despite a high perpendicular magnetic anisotropic energy.

If the recording layer 22 of the perpendicular magnetic recording medium of FIG. 1 is deposited so that a higher power and a lower gas pressure are applied to the first ferromagnetic layer 4 than to the second ferromagnetic layer 26 formed over the first ferromagnetic layer 24, the roughness of the recording layer 22 can be reduced, thereby improving flying conditions for the magnetic head.

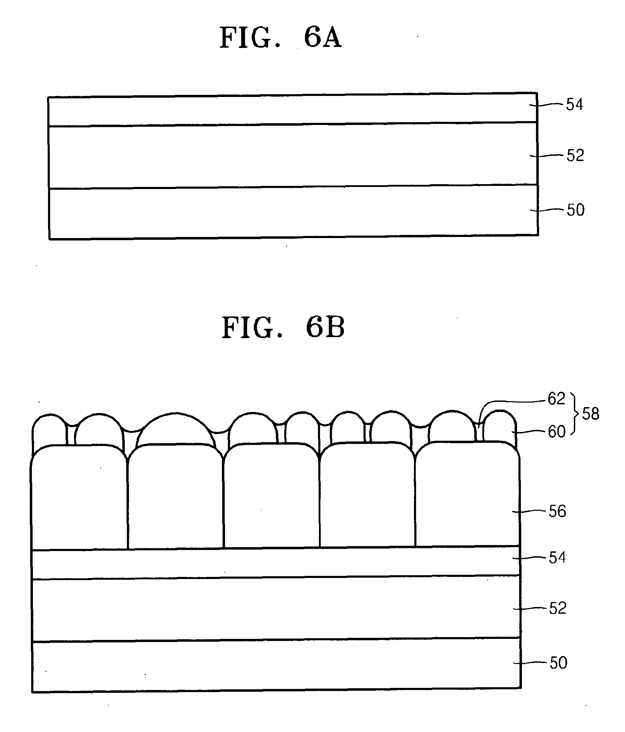

FIGS. 6A through 6E are cross-sectional views illustrating a method of manufacturing a perpendicular magnetic recording medium according to an exemplary embodiment of the present invention.

Referring to FIGS. 6A and 6B, a soft magnetic underlayer 52 formed of CoZrNb and a buffer layer 54 formed of Ta are formed on a substrate 50, and then an underlayer including a first underlayer 56 formed of Ru and a second underlayer 58 formed of Ru and oxygen is formed on the buffer layer 54. The first underlayer 56 is formed by sputtering using a Ru target at room temperature at a pressure less than 10 mTorr. The first underlayer 56 has a thickness of approximately 10 nm, high crystal quality, and a flat surface. The second underlayer 58 is formed on the first underlayer 56 by reactive sputtering in which argon gas and oxygen gas are introduced at a pressure of 40 mTorr. The total gas used in the reactive sputtering has an oxygen concentration of 1 %. The second underlayer 58 has a granular structure including grains 60 formed of Ru and boundary zones 62 magnetically isolating the grains 60. The second underlayer 58 has a thickness of approximately 8 nm. The second underlayer 58 has a surface roughness that is higher than that of the first underlayer 56 and the grains of the second underlayer 58 are isolated by the boundary zones 62 formed of oxygen.

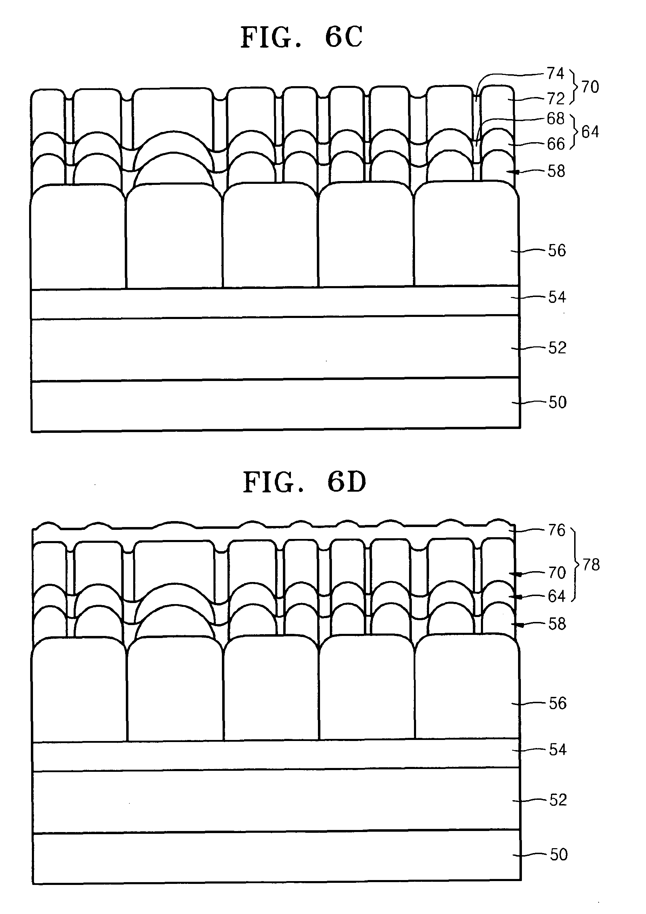

Referring to FIGS. 6C and 6D, a recording layer 78 including a first ferromagnetic layer 64 formed of CoPt-TiO₂, a second ferromagnetic layer 70 formed of CoCrPt-SiO₂, and a capping layer 74 formed of CoCrPtB is formed on the second underlayer 58 by sputtering. The first ferromagnetic layer 64 formed of CoPt-TiO₂ is formed using a CoPt-TiO₂ target at a pressure or 40 mTorr or more at a Pt-rich atmosphere to a thickness of approximately 10 nm. Grains 66 contained in the first ferromagnetic layer 64 formed of CoPt-TiO₂ are formed of CoPt and boundary zones 68 surrounding the grains 66 are formed of TiO₂. The second ferromagnetic layer 70 formed of CoCrPt-SiO₂ is formed by reactive sputtering in which argon gas and oxygen gas are introduced at room temperature using a CoCrPt-SiO₂ target. Total gas used in the reactive sputtering has an oxygen concentration of 0.1 to 10 %. The second ferromagnetic layer 70 formed of CoCrPt-SiO₂ is formed to a thickness of approximately 10 nm at a pressure 20 mTorr by increasing a sputtering power and decreasing a pressure to reduce the surface roughness of the first ferromagnetic layer 64 formed of CoPt-TiO₂. Grains 72 contained in the second ferromagnetic layer 70 formed of CoCrPt-SiO₂ are formed of CoCrPt and boundary zones 74 surrounding the grains 72 are formed of SiO₂. The capping layer 74 formed of CoCrPtB is formed as a continuous thin film to a thickness of approximately 5 nm at a pressure of 10 mTorr.

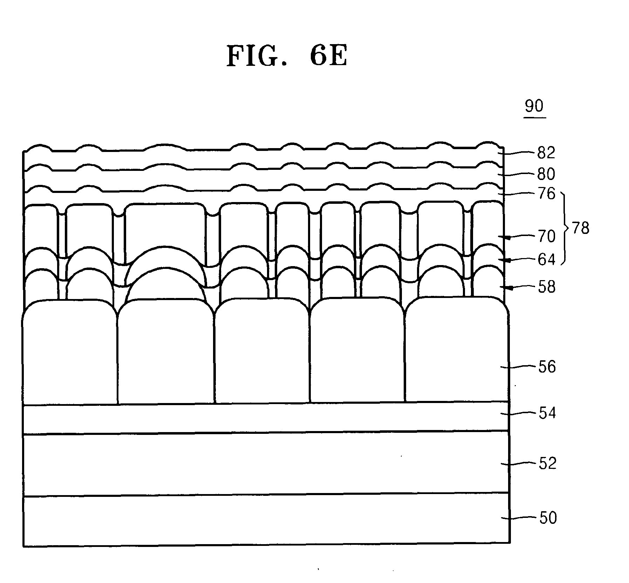

Referring to FIG. 6E, a protective layer 80 formed of DLC and a lubricating layer 82 formed of tetraol are formed on the recording layer 78, thereby completing a perpendicular magnetic recording medium 90.

Although the recording layer, excluding the capping layer 74, has a double-layer structure including the first and second ferromagnetic layers in the above exemplary embodiments, the present invention is not limited thereto. The recording layer may have a structure including three or more ferromagnetic layers. When three or more ferromagnetic layers are formed, each of the ferromagnetic layers may have a magnetic anisotropic energy Ku which decreases as distance increases from the underlayer 56 toward the capping layer 74.

As described above, according to the present invention, a perpendicular magnetic recording medium having high density, high thermal stability, and high magnetic anisotropic energy can be achieved.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A perpendicular magnetic recording medium comprising:
a substrate (10,50);
a soft magnetic layer (12,52) on the substrate
a titanium containing layer (14,54) on the soft magnetic layer;
a first underlayer (18,56) comprising Ru on the titanium containing layer;
a second underlayer (20,58) comprising Ru and oxygen on the first underlayer;
a first ferromagnetic recording layer (24,64) comprising a CoPt alloy on the second underlayer;
a second ferromagnetic recording layer (26,70) comprising a CoCrPt alloy on the first ferromagnetic recording layer; and
a capping layer (28,74) comprising a Co alloy with no oxygen over the second ferromagnetic layer,
wherein the Pt concentration of the second ferromagnetic recording layer (26,70) is lower than Pt concentration of the first ferromagnetic recording layer,
wherein the first ferromagnetic recording layer (24,74) and the second ferromagnetic recording layer (26,70) further comprise an oxide selected from the group consisting of a TiO₂, SiO₂ and CrO,
wherein the capping layer (28,74) is a continuous thin film, and
wherein each layer (24,26,70,64) of the first ferromagnetic recording layer and the second ferromagnetic recording layer has a magnetic anisotropic energy which decreases as distance increases from the underlayer toward the ferromagnetic layer.

2. The perpendicular magnetic recording medium of claim 1, wherein grains of the first ferromagnetic recording layer (24,64) are isolated by the oxide.

3. The perpendicular magnetic recording medium of claim 1, wherein the first ferromagnetic recording layer (24,64) has a Pt concentration of 10 at % to 50 at %.

4. The perpendicular magnetic recording medium of claim 3, wherein the second ferromagnetic recording layer (26,70) has a Pt concentration of 1 at % to 30 at %.

5. The perpendicular magnetic recording medium of claim 1, wherein the magnetic anisotropic energy of the first ferromagnetic recording layer (24,64) is 5 x 10⁶ to 5 x 10⁷ erg/cc.

6. The perpendicular magnetic recording medium of claim 5, wherein the magnetic anisotropy energy of the second ferromagnetic recording layer (26,70) is 1 x 10⁶ to 5 x 10⁶ erg/cc.

7. The perpendicular magnetic recording medium of claim 1, wherein each of the first ferromagnetic layer and the second ferromagnetic layer (24,26,64,70) has grains.

8. The perpendicular magnetic recording medium of claim 1, wherein the second underlayer (20,58) has granular structure.

9. The perpendicular magnetic recording medium of claim 8, wherein a surface roughness of the second underlayer (20,58) is larger than a surface roughness of the first underlayer (18,56).

10. A method of manufacturing a perpendicular magnetic recording medium comprising:
forming a soft magnetic layer (12) formed on a substrate (10);
forming a titanium containing layer (14) on the soft magnetic layer;
forming a first underlayer (18) comprising Ru on the titanium containing layer;
forming a second underlayer (20) comprising Ru and oxygen on the first underlayer;
forming a first ferromagnetic recording layer (24) comprising a CoPt alloy on the second underlayer;
forming a second ferromagnetic recording layer (26) comprising a CoCrPt alloy on the first ferromagnetic recording layer, wherein the Pt concentration of the second ferromagnetic recording layer (26,70) is lower than Pt concentration of the first ferromagnetic recording layer; and
forming a capping layer (28) comprising a Co alloy and no oxygen over the second ferromagnetic recording layer, the capping layer being a continuous thin film,
wherein grains of the first and the second ferromagnetic recording layer (24,26) are isolated by an oxide selected from the group consisting of a TiO₂, SiO₂ and CrO, and
wherein the second underlayer (20) is formed by a reactive sputtering in an oxygen atmosphere.

## Patentansprüche

1. Senkrechtes Magnetaufzeichnungsmedium, das Folgendes umfasst:
ein Substrat (10, 50);
eine weichmagnetische Schicht (12, 52) auf dem Substrat;
eine titanhaltige Schicht (14, 54) auf der weichmagnetischen Schicht;
eine erste Ru enthaltende Unterschicht (18, 56) auf der titanhaltigen Schicht;
eine zweite Ru und Sauerstoff enthaltende Unterschicht (20, 58) auf der ersten Unterschicht;
eine erste, eine CoPt-Legierung enthaltende ferromagnetische Aufzeichnungsschicht (24, 64) auf der zweiten Unterschicht;
eine zweite, eine CoCrPt-Legierung enthaltende ferromagnetische Aufzeichnungsschicht (26, 70) auf der ersten ferromagnetischen Aufzeichnungsschicht; und
eine eine Co-Legierung und keinen Sauerstoff enthaltende Deckschicht (28, 74) über der zweiten ferromagnetischen Schicht;
wobei die Pt-Konzentration der zweiten ferromagnetischen Aufzeichnungsschicht (26, 70) niedriger ist als die Pt-Konzentration der ersten ferromagnetischen Aufzeichnungsschicht,
wobei die erste ferromagnetische Aufzeichnungsschicht (24, 74) und die zweite ferromagnetische Aufzeichnungsschicht (26, 70) ferner ein Oxid umfassen, das aus der Gruppe bestehend aus TiO₂, SiO₂ und CrO ausgewählt ist,
wobei die Deckschicht (28, 74) ein kontinuierlicher dünner Film ist, und
wobei jede Schicht (24, 26, 70, 64) der ersten ferromagnetischen Aufzeichnungsschicht und der zweiten ferromagnetischen Aufzeichnungsschicht eine magnetische Anisotropieenergie hat, die mit zunehmendem Abstand von der Unterschicht zur ferromagnetischen Schicht hin abnimmt.

2. Senkrechtes Magnetaufzeichnungsmedium nach Anspruch 1, wobei Körner der ersten ferromagnetischen Aufzeichnungsschicht (24, 64) durch das Oxid isoliert werden.

3. Senkrechtes Magnetaufzeichnungsmedium nach Anspruch 1, wobei die erste ferromagnetische Aufzeichnungsschicht (24, 64) eine Pt-Konzentration von 10 at% bis 50 at% hat.

4. Senkrechtes Magnetaufzeichnungsmedium nach Anspruch 3, wobei die zweite ferromagnetische Aufzeichnungsschicht (26, 70) eine Pt-Konzentration von 1 at% bis 30 at% hat.

5. Senkrechtes Magnetaufzeichnungsmedium nach Anspruch 1, wobei die magnetische Anisotropieenergie der ersten ferromagnetischen Aufzeichnungsschicht (24, 64) 5 x 10⁶ bis 5 x 10⁷ erg/cm³ beträgt.

6. Senkrechtes Magnetaufzeichnungsmedium nach Anspruch 5, wobei die magnetische Anisotropieenergie der zweiten ferromagnetischen Aufzeichnungsschicht (26, 70) 1 x 10⁶ bis 5 x 10⁶ erg/cm³ beträgt.

7. Senkrechtes Magnetaufzeichnungsmedium nach Anspruch 1, wobei die erste ferromagnetische Schicht und die zweite ferromagnetische Schicht (24, 26, 64, 70) beide Körner haben.

8. Senkrechtes Magnetaufzeichnungsmedium nach Anspruch 1, wobei die zweite Unterschicht (20, 58) eine Kornstruktur hat.

9. Senkrechtes Magnetaufzeichnungsmedium nach Anspruch 8, wobei eine Oberflächenrauheit der zweiten Unterschicht (20, 58) größer ist als eine Oberflächenrauheit der ersten Unterschicht (18, 56).

10. Verfahren zur Herstellung eines senkrechten Magnetaufzeichnungsmediums, das Folgendes beinhaltet:
Bilden einer weichmagnetischen Schicht (12) auf einem Substrat (10);
Bilden einer titanhaltigen Schicht (14) auf der weichmagnetischen Schicht;
Bilden einer ersten Ru enthaltenden Unterschicht (18) auf der titanhaltigen Schicht;
Bilden einer zweiten Ru und Sauerstoff enthaltenden Unterschicht (20) auf der ersten Unterschicht;
Bilden einer ersten, eine CoPt-Legierung enthaltenden ferromagnetischen Aufzeichnungsschicht (24) auf der zweiten Unterschicht;
Bilden einer zweiten, eine CoCrPt-Legierung enthaltenden ferromagnetischen Aufzeichnungsschicht (26) auf der ersten ferromagnetischen Aufzeichnungsschicht, wobei die Pt-Konzentration der zweiten ferromagnetischen Aufzeichnungsschicht (26, 70) niedriger ist als die Pt-Konzentration der ersten ferromagnetischen Aufzeichnungsschicht; und
Bilden einer eine Co-Legierung und keinen Sauerstoff enthaltenden Deckschicht (28) über der zweiten ferromagnetischen Aufzeichnungsschicht, wobei die Deckschicht ein kontinuierlicher dünner Film ist,
wobei Körner der ersten und der zweiten ferromagnetischen Aufzeichnungsschicht (24, 26) durch ein Oxid isoliert werden, das aus der Gruppe bestehend aus TiO₂, SiO₂ und CrO ausgewählt ist, und
wobei die zweite Unterschicht (20) durch reaktives Sputtern in einer Sauerstoffatmosphäre gebildet wird.

## Revendications

1. Support d'enregistrement magnétique perpendiculaire comprenant :
un substrat (10,50) ;
une couche à aimantation temporaire (12,52) sur le substrat ;
une couche contenant du titane (14,54) sur la couche à aimantation temporaire ;
une première sous-couche (18,56) comprenant du Ru sur la couche contenant du titane ;
une deuxième sous-couche (20, 58) comprenant du Ru et de l'oxygène sur la première sous-couche ;
une première couche d'enregistrement ferromagnétique (24, 64) comprenant un alliage de CoPt sur la deuxième sous-couche ;
une deuxième couche d'enregistrement ferromagnétique (26, 70) comprenant un alliage de CoCrPt sur la première couche d'enregistrement ferromagnétique ; et
une couche de recouvrement (28,74) comprenant un alliage de Co sans oxygène par-dessus la deuxième couche ferromagnétique,
dans lequel la concentration de Pt de la deuxième couche d'enregistrement ferromagnétique (26, 70) est inférieure à la concentration de Pt de la première couche d'enregistrement ferromagnétique,
la première couche d'enregistrement ferromagnétique (24,74) et la deuxième couche d'enregistrement ferromagnétique (26,70) comprenant en outre un oxyde sélectionné dans le groupe constitué de TiO₂, SiO₂ et CrO,
la couche de recouvrement (28,74) étant un film mince continu, et
chaque couche (24,26,70,64) de la première couche d'enregistrement ferromagnétique et de la deuxième couche d'enregistrement ferromagnétique ayant une énergie anisotrope magnétique qui diminue avec l'augmentation de la distance de la sous-couche à la couche ferromagnétique.

2. Support d'enregistrement magnétique perpendiculaire selon la revendication 1, dans lequel des grains de la première couche d'enregistrement ferromagnétique (24,64) sont isolés par l'oxyde.

3. Support d'enregistrement magnétique perpendiculaire selon la revendication 1, dans lequel la première couche d'enregistrement ferromagnétique (24,64) a une concentration de Pt de 10 % à 50%.

4. Support d'enregistrement magnétique perpendiculaire selon la revendication 3, dans lequel la deuxième couche d'enregistrement ferromagnétique (26, 70) a une concentration de Pt de 1% à 30%.

5. Support d'enregistrement magnétique perpendiculaire selon la revendication 1, dans lequel l'énergie anisotrope magnétique de la première couche d'enregistrement ferromagnétique (24,64) est de 5 x 10⁶ à 5 x 10⁷ erg/cm³.

6. Support d'enregistrement magnétique perpendiculaire selon la revendication 5, dans lequel l'énergie anisotrope magnétique de la deuxième couche d'enregistrement ferromagnétique (26,70) est de 1 x 10⁶ à 5 x 10⁶ erg/cm³.

7. Support d'enregistrement magnétique perpendiculaire selon la revendication 1, dans lequel chacune de la première couche ferromagnétique et de la deuxième couche ferromagnétique (24,26,64,70) a des grains.

8. Support d'enregistrement magnétique perpendiculaire selon la revendication 1, dans lequel la deuxième sous-couche (20,58) a une structure granulaire.

9. Support d'enregistrement magnétique perpendiculaire selon la revendication 8, dans lequel une rugosité de surface de la deuxième sous-couche (20, 58) est supérieure à la rugosité de surface de la première sous-couche (18,56).

10. Procédé de fabrication d'un support d'enregistrement magnétique perpendiculaire comprenant :
la formation d'une couche à aimantation temporaire (12) sur un substrat (10) ;
la formation d'une couche contenant du titane (14) sur la couche à aimantation temporaire ;
la formation d'une première sous-couche (18) comprenant du Ru sur la couche contenant du titane ;
la formation d'une deuxième sous-couche (20) comprenant du Ru et de l'oxygène sur la première sous-couche ;
la formation d'un première couche d'enregistrement ferromagnétique (24) comprenant un alliage CoPt sur la deuxième sous-couche
la formation d'une deuxième couche d'enregistrement ferromagnétique (26) comprenant un alliage CoCrPt sur la première couche d'enregistrement ferromagnétique, dans laquelle la concentration de Pt de la deuxième couche d'enregistrement ferromagnétique (26,70) est inférieure à la concentration de Pt de la première couche d'enregistrement ferromagnétique ; et
la formation d'une couche de recouvrement (28) comprenant un alliage de Co sans oxygène par-dessus la deuxième couche d'enregistrement ferromagnétique, la couche de recouvrement étant un film mince continu,
les grains de la première et de la deuxième couche d'enregistrement ferromagnétique (24, 26) étant isolés par un oxyde sélectionné dans le groupe constitué de TiO₂, SiO₂ et CrO, et
la deuxième sous-couche (20) étant formée par une pulvérisation réactive dans une atmosphère d'oxygène.
